# EUROPÄISCHE PATENTSCHRIFT

(11) **EP 2 581 594 B1**
(45) Veröffentlichungstag und Bekanntmachung des Hinweises auf die Patenterteilung: **02.10.2019**
(21) Anmeldenummer: 12188116.3
(22) Anmeldetag: 11.10.2012
(51) Int. Cl.: F02K 9/00, F02K 9/26

(54) **SYSTEM ZUR LEBENSDAUERÜBERWACHUNG VON RAKETEN**
SYSTEM FOR LIFESPAN MONITORING OF MISSILES
SYSTÈME DE SURVEILLANCE DE LA DURÉE DE VIE DE MOTEURS-FUSÉES

(30) Priorität: 13.10.2011 DE 102011115812
(43) Veröffentlichungstag der Anmeldung: 17.04.2013
(73) Patentinhaber: Bayern-Chemie Gesellschaft für flugchemische Antriebe mbH, 84544 Aschau am Inn (DE)
(72) Erfinder: Tussiwand, Giuseppe, 83512 Wasserburg am Inn (DE); Mußbach, Günter, 01705 Freital (DE); Thumann, Albert, 92318 Neumarkt (DE); Steinfeld, Holger, 83539 Pfaffing (DE)
(74) Vertreter: LS-MP von Puttkamer Berngruber Loth Spuhler

(56) Entgegenhaltungen:
- WO-A2-2005/081930
- DE-A1-102009 049 581
- US-A- 5 038 295
- US-A1- 2005 150 998
- US-B1- 7 652 488

## Beschreibung

Die Erfindung bezieht sich auf ein System zur Lebensdauerüberwachung von Raketen.

Für die Funktion und Sicherheit einer Rakete ist es wichtig, dass der Treibsatz der mechanischen Beanspruchung standhalten kann, die während der Lebensdauer und schließlich beim Abbrand des Treibsatzes entsteht. Während der normalen Lagerung entsteht die mechanische Beanspruchung des Treibsatzes z. B. sobald dieser thermischen Schwankungen ausgesetzt ist, weil der Treibstoff in der Regel an der Innenwand des Gehäuses geklebt oder befestigt wird und stärker als das Gehäusematerial mit der Temperatur schrumpft oder sich ausdehnt. Die Beanspruchung des Treibsatzes kann auch direkt durch Vibrationen und Beschleunigungen, beispielsweise während Transportvorgängen entstehen. Auf der anderen Seite entsteht nach der Anzündung des Treibsatzes eine hohe Drucklast und eine Verformung des Treibsatzes durch die Vergrößerung des Gehäuses unter Druck. Haben sich vor der Anzündung im Treibsatz Risse gebildet oder entstehen diese wegen mangelnder Dehnfähigkeit während des Abbrandes, brennt der Treibsatz unkontrolliert ab. Durch die Anzündung der Rissoberfläche entsteht zusätzlicher Gasdurchsatz, der den Druck im Gehäuse erhöht. Der Treibsatz brennt damit schneller ab, sodass unter Umständen durch zu hohen Druck und eine längere thermische Belastung des Gehäuses durch heiße Abbrandprodukte das Gehäuse bersten kann.

Die Lebensdauer von Raketen hängt im Wesentlichen vom Zustand des Treibstoffs ab. Der Umwelt ausgesetzt, altert dieser auch innerhalb eines Gehäuses aufgrund von chemischen Prozessen und mechanischen Belastungen, Oxidation und Feuchtigkeit, Temperaturzyklen, Vibrationen usw. Treibstoffe mit Binder aus quer vernetztem Polybutadien erfahren beispielsweise in der Regel durch die Einwirkung von Sauerstoff eine Erhöhung der Steifigkeit und damit eine Verringerung der Dehnfähigkeit. Durch die Einwirkung von Feuchtigkeit kann sich die Steifigkeit verringern. Die chemischen Alterungsprozesse spielen sich mit unterschiedlicher Geschwindigkeit ab, wobei die Oxidationsgeschwindigkeit mit der Temperatur stark zunimmt.

Nach der Produktion und Lieferung ist eine sichere Nutzung der Raketen daher nicht automatisch gewährleistet. Vielmehr muss begleitend zur Nutzung eine Lebensdauerüberwachung durchgeführt werden, mit der versucht wird, die verbleibende Lebensdauer des Treibsatzes aufgrund des vorgefundenen Zustandes zu berechnen.

Die am häufigsten verwendete Methode zur Überwachung der Lebensdauer des Treibsatzes ist die zerstörende Prüfung. Dabei werden in regelmäßigen Abständen Raketen aus dem Bestand entnommen, die geröntgt und demontiert werden. Der Antrieb wird dann mit hohem Aufwand in Abschnitte zerlegt, beispielsweise mit einer ferngesteuerte Munitionssäge. Aus den einzelnen Abschnitten, bestehend aus Treibstoff, Liner und Isolation sowie Gehäusematerial, werden Proben verschiedener Geometrie entnommen und auf bestimmte Normwerte Geometrien gefräst und gestanzt. Die zahlreichen Proben, oft über 100 Stück, aus verschiedenen Bereichen des Treibsatzes, also der Haftungsoberfläche oder aus dem Bereich in der Nähe der freien Oberfläche, werden dann verschiedenen mechanischen und chemischen Versuchen unterzogen.

Der Zustand wird dann mit der für den Antrieb festgelegten, nicht zu überschreitenden Sicherheitsgrenze verglichen. So darf beispielsweise die Dehnfähigkeit des Materials bei einer gewissen Temperatur und Dehngeschwindigkeit nicht ein Mindestmaß unterschreiten, sonst ist der Treibsatz am Ende seiner Lebensdauer. Geschieht dies nicht, wird versucht, eine möglichst realistische Geschichte der Umwelt zu erstellen, der der Treibsatz ausgesetzt gewesen ist, wobei mit Materialmodellen für die Treibstoffalterung, die mit Laborproben ermittelt wird, der Zustand des Treibsatzes berechnet wird. Der real festgestellte Zustand wird mit dieser Abschätzung verglichen, und die Restlebensdauer berechnet.

Zudem wurde vorgeschlagen, die zerstörende Prüfung, gekoppelt mit Umwelterfassungsgeräten zur Lebensdauerüberwachung anzuwenden. Dabei wird die vorstehend beschriebene zerstörende Prüfung durch kritisch angesehene Umweltparameter, wie Temperatur, Feuchtigkeit, Beschleunigung (Vibrationen und Schockbeschleunigung) ergänzt. Die Erfassung der Umweltparameter wird durch ein Umwelterfassungsgerät übernommen, welches alle notwendigen Sensoren, einen elektronischen Speicher und eine Stromquelle, üblicherweise eine Batterie, in einem kleinen Raum aufweist (Robert A. Müller: "Wireless Sensing for Automated Munitions Management" und L. Bancallari: "MBDA RFID/Health Monitoring capabilities" Vortrag beim NATO RTO AVT 176 Symposium on Advances in Service Life Determination and Health Monitoring of Munitions, Antalya 12. - 15. April 2010). Das Umwelterfassungsgerät wird in der Nähe der Rakete angeordnet, beispielsweise im Transport- und Lagerungsbehälter der Rakete. Das Umwelterfassungsgerät ist so programmiert, dass es entweder in festen Abständen die Messung der Sensoren ansteuert und deren gemessene Werte abspeichert, und/oder nur dann misst, wenn gewisse Schwellwerte von Temperatur, Beschleunigung usw. erreicht werden. Die systematische Erfassung der Umwelt erlaubt eine genauere Festlegung der Intervalle, bei denen die zerstörende Prüfung ausgeführt wird. Es können auch gezielt Raketen für die zerstörende Prüfung gewählt werden, die einer höheren Belastung (z.B. Temperatur)ausgesetzt worden sind.

Es ist ferner die Nutzung von Sensoren vorgeschlagen worden, die direkt in den Treibsatz eingebettet sind. Dabei sind sowohl Spannungssensoren an der Haftungsoberfläche des Treibsatzes bekannt, insbesondere Spannungs- und Temperatursensoren ("Dual Stress and Temperature Sensors" oder "DBST", Chelner, H., Buswell J. "Fidelity and Use of DBST Sensors for Health Monitoring of Munitions" Vortrag beim NATO RTO AVT 176 Symposium on Advances in Service Life Determination and Health Monitoring of Munitions, Antalya 12. - 15. April 2010). Diese Sensoren müssen vor dem Gießen des Treibsatzes im Gehäuse geklebt werden. Sie messen die mechanische Spannung normal zur Sensormembran und die lokale Temperatur. Die Einbettung der Sensoren ist jedoch mit erheblichen Nachteilen verbunden. So erfolgt beispielsweise eine Schwächung des Druckbehälters, da das Gehäuse gebohrt werden muss, wenn die Kabel von dem Sensor aus dem Gehäuse herausgeführt werden. Ansonsten muss das Kabel an der Haftungsoberfläche über die gesamte Länge des Treibsatzes weitergeführt werden, was ein Risiko für die Beständigkeit der Haftung des Treibsatzes darstellt. Zudem verbrauchen die Sensoren elektrische Leistung in unmittelbarer Nähe des Treibstoffs. Im Falle eine Kurzschlusses kann erheblich mehr Leistung von der Batterie zum Sensor fließen und der Treibstoff dadurch angezündet werden. Um dies zu verhindern, ist eine komplexe Auslegung der Treiberelektronik erforderlich. Bei der Bestückung aller Raketen mit diesen Sensoren ergeben sich zudem erhebliche Mehrkosten. Auch führen die Sensoren zu neuen möglichen Versagensmechanismen. Der Einsatz solcher "Health"-Sensoren in Raketen ist auch aus US 2005/0150998 A1 und US 7 652 488 B1 bekannt. Nach US 5 038 295 werden die Eigenschaften gealterter Treibstoffproben mit einem Spektrometer bestimmt.

Aufgabe der Erfindung ist es, ein einfaches zuverlässiges System zur Lebensdauerüberwachung von Raketen bereitzustellen.

Dies wird erfindungsgemäß mit dem System zur Lebensdauerüberwachung von Raketen nach dem Anspruch 1 erreicht. Danach wird von jedem Treibstoff-Los neben den Raketen wenigstens eine Begleitprobe hergestellt, die den gleichen Umweltparametern ausgesetzt ist, wie die Raketen. Die Motorbrennkammer der Begleitprobe ist mit einem Treibsatz aus dem Treibstoff-Los gefüllt und entspricht auch ansonsten der Motorbrennkammer der Raketen, deren Lebensdauer überwacht werden soll.

Der Treibsatz der Begleitprobe ist an der an der Brennkammerwand haftenden Oberfläche mit Spannungssensoren, insbesondere kombinierten Spannungs- oder Temperatursensoren (DBST) versehen, welche an wenigstens ein Datenerfassungsgerät gekoppelt sind. Statt einer können beispielsweise auch zwei oder drei Begleitproben von jedem Treibstoff-Los hergestellt werden.

Das heißt, bei jedem Treibstoff-Ansatz wird neben den normalen Motorbrennkammern wenigstens eine Motorbrennkammer gefüllt, die u. a. mit eingebetteten Spannungssensoren, insbesondere DBST-Sensoren an der Haftungsoberfläche des Treibsatzes bestückt ist. Diese Brennkammer enthält also den gleichen Treibstoff wie alle anderen Brennkammern aus dem gleichen Treibstoffansatz oder -Los. Sie wird dann in einen Raketenmotor eingebaut, der abgesehen von den Sensoren und dem Datenerfassungsgerät im Wesentlichen die gleiche Konfiguration aufweist wie die Raketenmotoren der Raketen, die mit diesem Treibstoffansatz hergestellt sind.

Die Begleitprobe ist mit einer ausreichenden Anzahl an Sensoren bestückt. Die Sensoren erfassen die als kritisch angesehenen Umweltparameter, z. B. Temperatur, Feuchtigkeit, Beschleunigung (Vibrationen und Schock...) innerhalb der Rakete. Dabei werden nur die Parameter berücksichtigt, die einen Einfluss auf das Versagen des Treibsatzes haben.

Die Anzahl der Sensoren kann redundant sein, um eventuelle Ausfälle zu berücksichtigen. Anzahl und Position der Sensoren richten sich auch nach der Notwendigkeit, die Verteilung dieser Parameter innerhalb des Raketenmotors korrekt zu erfassen.

Weitere Sensoren können in den Nähe kritischer Stellen des Treibsatzes oder des Raketeninneren angebracht werden, um bestimmte Versagensmechanismen direkt beobachten zu können, z. B. die Ablösung des Treibsatzes am vorderen oder hinteren Ende der Haftungsoberfläche.

Die Sensoren sind an ein oder mehrere Datenerfassungsgeräte gekoppelt und werden von diesen angesteuert. Sie können von einer internen Batterie gespeist werden. Diese ist leicht zugänglich angeordnet und kann leicht ausgetauscht und wieder aufgeladen werden, sodass ein Austausch der Batterie möglichst selten stattfinden muss. Die Datenerfassungsgeräte können auch von einer externen Stromquelle und einem externen Erfassungsgerät angesteuert werden. Die Daten aus den Sensoren werden im Massenspeicher des Erfassungsgeräts gespeichert.

Die Düsen von Raketenmotoren werden mit einer Umweltabdeckung versiegelt, um den Treibstoff gegen Umwelteinflüsse wie Feuchtigkeit und Sauerstoff zu schützen. Die Begleitprobe wird vorzugsweise mit einer nach innen modifizierten Version der Abdeckung versiegelt. Dabei ist zwischen der Umweltabdeckung und der Düse der Begleitprobe ein gasdurchlässiges, also mit Öffnungen versehenes Gehäuse vorgesehen, welches Proben des Treibstoffs von dem Treibstoff-Los enthält, mit dem die Motorbrennkammer der Begleitprobe und die Motorbrennkammern der Raketen gefüllt sind. Durch den freien Gasaustausch zwischen dem inneren Volumen des Raketenmotors und den Treibstoffproben in dem Gehäuse altern die Treibstoffproben wie die Oberfläche des Treibsatzes. Zwischen der Umweltabdeckung und dem Treibsatz der Begleitprobe kann eine Treibstoffscheibe aus dem Treibstoff-Los vorgesehen sein. Der Treibsatz der Begleitprobe kann dazu entsprechend kürzer ausgeführt sein. Die Länge der Treibstoffscheibe hängt von der Treibsatzkonfiguration und dem freien Volumen bis zur Umweltabdeckung ab, sodass das Länge- zu Durchmesserverhältnis des Treibsatzes nicht wesentlich geändert wird. An der Treibstoffscheibe kann direkt gemessen werden, ob die Alterung eine nicht-uniforme Härtung oder Aufweichung des Treibstoffs über die Treibsatzdicke verursacht hat.

Die Begleitprobe wird ansonsten von der Konfiguration des Raketenmotors abgeleitet und ist, abgesehen von den notwendigen Sensoren, dem Datenerfassungsgerät und gegebenenfalls den Treibstoffproben und/oder der Treibstoffscheibe erheblich vereinfacht, und zwar so, dass die Begleitprobe dem Raketenmotor thermisch entspricht, jedoch kostengünstiger als die Rakete ist. So können beispielsweise bei einer Begleitprobe für einen Staustrahlantrieb mit Feststoff-Booster vereinfachte oder gar keine Lufteinläufe montiert und durch eine Isolationsschicht mit dem gleichen thermischen Isolationsverhalten wie die normalen Lufteinläufe ersetzt werden. Die Brennkammern der Begleitprobe können durch ein einfaches Rohrstück gebildet sein. Die Begleitprobe kann, muss aber nicht funktionsfähig sein. Die Begleitprobe beinhaltet jedoch vorzugsweise den gleichen Anzünder und die gleichen pyrotechnischen Komponenten der Rakete, sofern diese für die Alterungsüberprüfung der Rakete von Bedeutung sind.

Alle weiteren Komponenten der Rakete, beispielsweise Suchkopf, Antenne, Steuerung, Rudersystem, Bordrechner, werden durch massenrepräsentative Bauteile aus günstigem Werkstoff ersetzt. Die Außenhülle der Begleitprobe vor, hinter und um den Raketenmotor wird aus einem thermisch identischen und massenrepräsentativen Material ausgeführt. Im Allgemeinen werden originale Elemente der Rakete für die Begleitprobe verwendet, wenn sie für das Alterungsverhalten als wichtig erachtet werden, beispielsweise Thermalbatterie, weitere pyrotechnische Komponenten und gegebenenfalls der Gefechtskopf.

Die Begleitprobe ist damit kostengünstiger als ein funktionsfähiger Raketenmotor und wesentlich kostengünstiger als eine Rakete.

Vorzugsweise ist jeder Rakete, mindestens jedoch einen repräsentativen Teil der Raketen benachbart ein Umwelterfassungsgerät zugeordnet, also in einem Abstand von vorzugsweise maximal 5 m, insbesondere maximal 2 m von der Rakete angeordnet sind. So kann bei einer Bunkerlagerung eine repräsentative Anzahl von Raketen mit Umwelterfassungsgeräten versehen sein oder je ein Umwelterfassungsgerät pro Rakete bei Raketen außerhalb der Bunkerlagerung, beispielsweise pro Abschussrohr oder Transportgerät vorgesehen sein.

Mit den Umwelterfassungsgeräten werden die für die Alterung als kritisch angesehenen Umweltparameter erfasst, wie Temperatur, Feuchtigkeit, Beschleunigung (Vibrationen und Schockbeschleunigung). Das Umwelterfassungsgerät weist alle notwendigen Sensoren, einen elektronischen Speicher und eine Stromquelle, üblicherweise eine Batterie, in einem kleinen Raum auf (vgl. Robert A. Müller: "Wireless Sensing for Automated Munitions Management" a.a.O.). Sofern die Raketen in einem Raketenbehälter aufbewahrt werden, ist das Umwelterfassungsgerät vorzugsweise im Raketenbehälter vorgesehen, beispielsweise in dem für Trockenbeutel vorhandenen Volumen im Raketenbehälter, welches von außen zugänglich ist.

Wenn die Rakete nicht in einem Behälter gelagert wird, sondern beispielsweise in einem Abschussrohr an einem Fahrzeug oder in einem Gebäude, so werden die Umwelterfassungsgeräte dort in der Nähe der Rakete montiert.

Die Entnahme und Montage der Umwelterfassungsgeräte ist möglichst einfach gestaltet. Die Daten, die die Umwelterfassungsgeräte abgespeichert haben, werden vorzugsweise automatisch und in regelmäßigen Abständen weitergefunkt, insbesondere solange der Raketenbehälter in einem festen Bunker ist. Im Feldeinsatz funken die Erfassungsgeräte normalerweise nicht und speichern die Daten ohne weitere Emissionen in einem ausreichend großen Massenspeicher. Die Umwelterfassungsgeräte können miteinander kommunizieren und vernetzt sein. Sie können weitere Informationen beinhalten, die für die Logistik des Prozesses wichtig sind, insbesondere die Seriennummer der Rakete und deren Motor und können folgende Informationen anzeigen:
- Restlebensdauer der Rakete in einer Standardumwelt (z. B. 25° konstante Temperatur)
- Restlebensdauer der Rakete in der Umwelt, in der die Rakete in letzter Zeit gelagert gewesen ist (z. B. in der letzten Woche, am letzten Tag oder im letzten Monat),
- die Geschwindigkeit der Lebensdauerabnahme in Prozent, z. B. pro Jahr oder pro Monat,
- Seriennummer der Rakete und des Motors,
- Transportwege und Transportvorgänge mit Datum und Dauer,
- wie oft die Rakete aus dem Behälter entnommen wurde,
- wie oft der Behälter, in dem die Rakete gelagert ist, geöffnet wurde,
- geographische Lage der Rakete;
- ob und wie oft bestimmte Schwellwerte überschritten worden sind, beispielsweise eine maximale oder minimale Temperatur, eine maximale Feuchtigkeit, ein maximaler Beschleunigungswert oder die Anwesenheit von Wasser oder Benzin,
- falls das Umwelterfassungsgerät batteriebetrieben ist, ob die Ladung der Batterie zu gering ist.

Die Daten sind bei Bedarf codiert und mittels geeigneter kryptographischer Verfahren gesichert.

Vorzugsweise erkennt das Umwelterfassungsgerät, ob eine Rakete aus dem Behälter entnommen und dort wieder abgelegt worden ist, wobei die Zeit der Entnahme vom Umwelterfassungsgerät abgespeichert werden kann. Mit dem Umwelterfassungsgerät wird auch erkannt, ob und wann eine andere Rakete in den Behälter eingebracht worden ist. Vorzugsweise ist an dem Ort, beispielsweise in dem Bunker, an dem die Raketen an einem Stützpunkt oder Standort gelagert werden, jeweils ein Datenerfassungsknoten zur Abfrage und zum Sammeln der Daten der den Raketen zugeordneten Umwelterfassungsgeräten vorgesehen, wobei die abgefragten und gesammelten Daten an ein an dem Stützpunkt oder Standort vorgesehenes lokales Datenverarbeitungssystem als lokalem Bestandsmanager übermittelt werden.

Der Datenerfassungsknoten kann fest an ein Lager- oder Bunkergebäude installiert sein, aber auch z. B. als Handgerät im Feldeinsatz verwendet werden. Der Datenerfassungsknoten fragt die Umwelterfassungsgeräte in den Raketenbehältern ab und sammelt deren Umweltdaten in regelmäßigen Abständen. Der Datenerfassungsknoten sendet die Daten über ein Datenübertragungssystem an das lokale Datenverarbeitungssystem oder lokalen Bestandsmanager. Die Datenübertragung ist bei Bedarf mittels geeigneter kryptographischer Verfahren codiert und somit gegen unbefugte Fremdabfragen gesichert.

Das Datenübertragungssystem pro Stützpunkt, also beispielsweise Lagergebäude oder Schiff weist eine oder mehrere Antennen auf, um die Daten aus den Datenerfassungsknoten zum lokalen Datenverarbeitungssystem zu übertragen. Als Datenübertragungssystem kann auch eine tragbare Feldversion verwendet werden.

Das lokale Datenverarbeitungssystem kann durch einen normalen Rechner gebildet sein, gegebenenfalls gekoppelt mit anderen Rechnern an anderen Stützpunkten. Es kann, je nachdem wie der Nutzer organisiert ist, mit einer logistischen Zentrale und/oder einer Nutzungsleitung verbunden sein.

Die in das lokale Datenverarbeitungssystem implementierte Software sollte folgende Funktionen aufweisen oder zumindest unterstützen:
- als eigene Funktionen die Sicherung aller Daten mit einem geeigneten Massenspeicher, z. B. einer Festplatte sowie Speicherung einer Kopie der Daten in regelmäßigen Abständen (Datensicherungsfunktion);
- als lokale Standortfunktionen über alle Datenerfassungsgeräte -
- eine gesonderte Erfassung aller Sondermeldungen aus den Umwelterfassungsgeräten, beispielsweise ob und in welchen Behältern Schwellwerte wie die Obergrenze der Temperatur, für Wasser oder beispielsweise Flugbenzindampfkonzentration erreicht worden sind, oder ob z. B. ein Behälter durch einen Sturz eine zu hohen Schockbeschleunigung erlitten hat und somit nicht mehr zuverlässig funktionieren wird;
   - eine gesonderte Erfassung aller Sondermeldungen aus den Umwelterfassungsgeräten, wie eine zu geringe Batterieladung und andere Meldungen, die eine menschliche Intervention erforderlich machen würden, beispielsweise das Ersetzen von Trockenbeuteln;
   - eine Anzeige, welche Behälter offen bzw. ohne Rakete sind, wie viele Raketen am Stützpunkt oder Standort verfügbar sind und deren Position;
   - für den gesamten Raketenbestand am Stützpunkt oder Standort eine Anzeige, wie oft welche Rakete aus welchem Behälter entnommen wurde.

Das erfindungsgemäße System weist vorzugsweise einen Lebensdaueranzeiger auf, welcher durch ein Lebensdauerberechnungsprogramm gebildet wird. Dabei verwendet das lokale Datenverarbeitungssystem vorzugsweise eine Kopie des Lebensdauerberechnungsprogramms der Lebensdaueranzeiger oder bekommen von diesen Informationen über die Restlebensdauer des Raketenbestandes. Damit sind beispielsweise folgende Funktionen möglich:
- eine Anzeige der Restlebensdauer aller Raketen in einer Standardumwelt in Klassen, beispielsweise wie viele noch mindestens eine bestimmte Lebensdauer von z. B. fünf Jahren aufweisen und wie viele nur noch eine bestimmte Lebensdauer von z. B. zwei Jahren haben;
- eine Anzeige, welche Rakete eines Loses Raketen die geringste Lebensdauer besitzt;
- eine Anzeige der Restlebensdauer aller Raketen in der Umwelt, in der die Raketen in letzter Zeit beispielsweise in der letzten Woche, am letzten Tag oder im letzten Monat gelagert gewesen sind und Unterteilung in Restlebensdauerklassen, wie vorstehend beschrieben;
- eine Anzeige der Geschwindigkeit der Lebensdauerabnahme aller Raketen in Prozent pro Jahr oder pro Monat und entsprechende Unterteilung des Bestandes den Klassen, wie vorstehend beschrieben.

Zudem weist das lokale Datenverarbeitungssystem zur Ankopplung an eine logistische Datenbank folgende weitere Funktionen auf:
- eine Anzeige der Position der einzelnen Raketen des gesamten Bestandes;
- eine Anzeige der Anforderungen an Raketen und Wartungsmaterial, wie Transportbefehle, Bedarfsmeldungen an Material und Ersatzteilen und Abwicklungsstand der logistischen Prozesse;
- eine Anzeige der Transportwege und Transportvorgänge mit Datum und Dauer.

Sind die empfangenen Daten codiert, so ist das lokale Datenverarbeitungssystem in der Lage, die Daten zu decodieren bzw. für die Speicherung neu zu codieren.

Vorzugsweise ist eine zentrale Datenbank als zentraler Bestandsmanager vorgesehen, an welche in regelmäßigen Zeitabständen Daten von den lokalen Datenverarbeitungssystemen übermittelt werden. Das heißt, die lokale Datenverarbeitungssysteme an den einzelnen Standorten, an denen Raketen gelagert werden, können die Daten des Raketenbestandes an dem Standort verwalten und sämtliche oder einen Teil der aufgenommenen Informationen an die zentrale Datenbank weiterleiten, welche die Daten des Gesamtbestandes der Raketen aufnimmt und organisiert.

Die zentrale Datenbank bekommt in regelmäßigen Zeitabständen die Daten von dem lokalen Datenverarbeitungssystem und reduziert die Informationen, sodass beispielsweise folgende Informationen von der zentralen Datenbank generiert werden:
- die Position aller Raketen gruppiert nach Standort und wie viele außerhalb der Standorte sind, also beispielsweise Standort A: 78 Raketen, Nähe Standort A: 6 Raketen, Standort B: 250 Raketen, Transport vom Standort B zum Standort A: 50 Raketen;
- eine Anzeige beispielsweise als Balkendarstellung aller Raketen-Lose nach Restlebensdauer: z. B. Los 1, 48 Raketen, mindestens z. B. 10 Jahre Lebensdauer; Los 2: 46 Raketen, mindestens z. B. 6 Jahre Lebensdauer, wobei sich die Restlebensdauer auf ein standardisiertes Klima (z. B. 20°C) oder auf das Standardklima der Umgebung, (z. B. Lagerung in Deutschland 10°C, Lagerung an einem südeuropäischen Standort 15°C) bezieht;
- eine Anzeige zur Darstellung aller Raketen, deren Lebensdauer schneller abnimmt als ein gewisser Schwellwert, z. B. mehr als 5 % pro Jahr;
- eine Anzeige oder Darstellung der Anzahl der logistischen Vorgänge, z. B. im letzten Jahr, die Anzahl der Batteriewechsel, Ein- und Auslagerungen von Raketen und Reparaturen für die weitere Planung.

Die zentrale Datenbank als zentralen Bestandsmanager verwendet ebenfalls eine Kopie des Lebensdaueranzeigers und kann somit gegebenenfalls virtuelle Szenarien darstellen oder Empfehlungen geben. So kann beispielsweise vom Nutzer abgefragt werden, wie sich ein Transport von zwei bestimmten Losen Raketen von einem Standort mit einem milden Klima zu einem mit einem heißen Klima auf die Lebensdauer dieser Lose auswirken würde, sodass man beispielsweise vor einer Mission im Ausland rechtzeitig mit der Beschaffung von einigen Losen beginnen kann. So kann beispielsweise die zentrale Datenbank als zentraler Bestandsmanager vorschlagen, dass statt eines bestimmten Loses ein anderes an einen heißen Standort transportiert wird, sodass die gesamte Lebensdauer aller Lose günstiger oder gleichmäßiger ausfällt.

Der Lebensdaueranzeiger ist eine Software, die ausgehend von den erfassten Umweltdaten und einer Diagnostiksoftware, die nachstehend beschrieben ist, die Lebensdauer bezogenen Informationen aller Raketen mittels eines Lebensdauerberechnungsalgorithmus berechnet. Der Lebensdauerberechnungsalgorithmus verwendet das aktuell gültige Berechnungsmodell. In diesem sind im Wesentlichen zwei Gesetze implementiert:
1. Die Auswirkung der Temperatur und gegebenenfalls auch der Feuchtigkeit auf die Geschwindigkeit der Alterungsprozesse (vgl. Celina M., Graham A.C. K.T., Assink R.A., Minier, L.M., "Thermal Degradation Studies of a Polyurethane Propellant Binder" Rubber Chemistry and Technology, 2000, Seiten 678 - 693). Dabei können auch abgestimmte Standards verwendet werden (vgl. STANAG 4581, "Explosives, Assessment of Ageing Characteristics of Composite Propellants Containing an Inert Binder, Military Agency for Standardization, NATO, Final Draft Edition, Oktober 2003"). In der Regel sind für jeden Treibstoff aus der Entwicklungsphase entsprechende Studien vorhanden, die während der Qualifikation durch destruktive Prüfung korrigiert und valididiert worden sind. Man spricht in diesem Zusammenhang von einer Materialzeit und einem äquivalenten Alter bei einer Bezugstemperatur, z. B. 20°C oder 25°C. Dabei ist berücksichtigt, dass eine Lagerung bei hoher Temperatur die Alterungsprozesse beschleunigt und somit die Materialzeit während dieser Phase schneller abläuft als bei der Bezugstemperatur der 20 oder 25°C (umgekehrt bei kalter Lagerung).
2. Die Auswirkung der Alterung auf die für die Berechnung der Strukturfestigkeit des Treibsatzes notwendigen Materialeigenschaften, also z. B. wie schnell die Dehnfähigkeit mit der Zeit bei einer bestimmten Bezugstemperatur sind und die Festigkeit und Steifigkeit des Treibstoffs zunehmen.

Die Auswirkungen 1. und 2. werden über mathematische Funktionen beschrieben.

Dem Lebensdaueranzeiger liegt also ein Lebensdauerberechnungsalgorithmus zugrunde, in den insbesondere zum einen die Auswirkung der Temperatur und gegebenenfalls der Feuchtigkeit auf die Geschwindigkeit des Alterungsprozesses und zum anderen die Auswirkung des Alterungsprozesses auf die für die Berechnung der Strukturfestigkeit des Treibsatzes notwendigen Materialeigenschaften implementiert sind.

Dabei wird wie folgt vorgegangen:
- Für jedes Los Raketen, also Raketen, die einen Treibsatz aus demselben Treibstoff-Los wie der Treibsatz der Begleitprobe aufweisen, erfolgt eine Berechnung, welche Raketen wann und wie lange außerhalb des Behälters gewesen sind. Es wird auch bestimmt, für welche Raketen wann und wie lange der Behälter offen gewesen ist, ohne dass die jeweiligen Raketen dem Behälter entnommen worden sind.
- Für Raketen, bei denen der Behälter zeitweise offen gewesen ist, werden für die Zeit im Behälter die Klimadaten des jeweiligen Umwelterfassungsgeräts angerechnet oder faktorisierte Wetterdaten oder Daten aus standardisierten Klimatabellen verwendet.
- Für die Zeit außerhalb des Behälters und Lagergebäudes wird über einen Abgleich mit standardisierten Klimatabellen den Raketen die unkontrollierte Umwelt der Umgebung zugeordnet. Auch hier können verfügbare Wetterdaten mit einem Faktor angewendet werden.

Falls die Raketen für einen Tagflug oder einen Transportvorgang entnommen worden sind oder dies angenommen werden kann, beispielsweise an Geschwaderstützpunkten, wird zeitanteilig die Umwelt einer Standardflugmission dazugerechnet. Wenn keine Transport- und Flugdaten aus Flug- oder Fahrzeug bekannt sind, kann, ohne einen für die Gesamtlebensdauer relevanten Fehler zu machen, eine konservative Umweltabfolge angenommen werden.

Für die Zeit im geschlossenen Behälter wird den Raketen die Umwelt zugeordnet, die mit dem jeweiligen Umwelterfassungsgerät erfasst worden ist.

Sind diese Informationen zugeordnet und berechnet, dann wird folgendes ausgeführt:
- Die Berechnung der Lebensdauer jeder einzelnen Rakete über den Lebensdauerberechnungsalgorithmus. Dessen eingebaute Modelle zu den vorstehenden Punkten 1. und 2. werden von Zeit zu Zeit über einem Diagnostikprogramm aktualisiert und werden somit mit der Zeit immer genauer. Wenn die Umwelterfassungsgeräte eine direkte Anzeige der Lebensdauer besitzen, wird diese Information den Umwelterfassungsgeräten über das lokale Datenverarbeitungssystem zugespielt.
- Für jedes Los Raketen wird berechnet, welche Rakete in einem Los am wenigstens Lebensdauer besitzt. Diese Rakete wird als Pilotrakete ausgewählt. Die Pilotrakete kann über das lokale Verarbeitungssystem extra angezeigt werden. Die Geschichte der Pilotrakete, also beispielsweise die erfasste Temperatur und Feuchtigkeit als Funktion der Zeit, wird gesondert abgespeichert. Die Umweltgeschichte besteht aus Zeitabschnitten, in denen die Pilotrakete im Behälter gelagert ist, wobei eine direkte Messung der Umwelt über die Umwelterfassungsgeräte erfolgt, anderen Zeitabschnitten, während derer der Behälter offen gewesen ist und Zeitabschnitten, während derer die Pilotrakete außerhalb des Behälters z. B. für eine Transport- oder Flugmission gewesen ist:
- die Berechnung der Restlebensdauer aller Raketen in einer Standardumwelt;
- die Berechnung der Restlebensdauer aller Raketen in der Umwelt, in dem die Raketen in letzter Zeit gelagert gewesen sind, beispielsweise in der letzten Woche, dem letzten Tag oder Monat;
- die Berechnung der Geschwindigkeit der Lebensdauerabnahme aller Raketen z. B. in Prozent pro Jahr oder Prozent pro Monat und entsprechende Unterteilung des Bestandes in Klassen nach den vorstehend dargestellten Verfahren.

Der Lebensdaueranzeiger überträgt die so erzeugten Informationen an das lokale Datenverarbeitungssystem und die zentrale Datenbank und an ein Klimasteuerprogramm. Der Lebensdauerberechnungsalgorithmus existiert als Kopie bei dem Lebensdaueranzeiger, bei dem Bestandsanzeiger und bei dem Klimasteuerungsprogramm, wobei die aktuellste Version im Klimasteuerungsprogramm entsteht und umgehend an die relevante Systemkomponenten kommuniziert und dort aktualisiert wird.

Vorzugsweise wird also von jedem Los Raketenmotore derjenige Raketenmotor in dem Los, welcher aufgrund des Lebensdaueranzeigers die geringste Lebensdauer aufweist als Pilotmotor ausgewählt, wobei die Begleitprobe von dem Treibstofflos oder -ansatz aus dem das Los Raketenmotore hergestellt worden ist, zur Aktualisierung der Lebensdauer der Begleitprobe einem Klimasteuerungsprogramm unterworfen, welches aus dem Lebensdaueranzeiger die Umweltgeschichte des Pilotmotors übernimmt.

In der Software zur Klimasteuerung der Begleitproben ist eine Kopie des Lebensdauerberechnungsalgorithmus abgelegt. Der Lebensdauerberechnungsalgorithmus übernimmt für jedes Los die Umweltgeschichte der Pilotrakete und reduziert diese über ein Lastzählverfahren für Temperatur, Feuchtigkeit und Beschleunigungszyklen auf eine vereinfachte und gegebenenfalls auch beschleunigte Temperatur-, Feuchtigkeits- und Lastabfolge. Gegenüber den Alterungsprozessen kann eine zeitliche Beschleunigung durch eine Anhebung der Temperatur erreicht werden, und gegenüber mechanischen Vibrationen über die Erhöhung der Vibrationsamplitude. Temperatur und Vibrationen werden aber nur soweit angehoben, dass die verkürzte Umweltgeschichte repräsentativ bleibt. Die Beschleunigung reduziert die Zeit der aktiven Lebensdaueraktualisierung der Begleitprobe.

Die Umweltgeschichte kann gegebenenfalls auch exakt die gleiche sein, die für die Rakete mit der kürzesten Lebensdauer erfasst worden ist, beispielsweise um eine Lagerungsphase bei hoher Temperatur in unkontrollierter Umwelt umzusetzen.

Die Begleitprobe des gleichen Loses wird dann der festgelegten, für die jeweilige Pilotrakete eines Loses repräsentativen Umweltgeschichte ausgesetzt. Da der Treibsatz die Begleitprobe aus dem gleichen Treibstofflos oder -ansatz wie der der zugehörigen Pilotrakete hergestellt und der gleichen oder einer repräsentativen Umweltgeschichte wie die zugehörige Pilotrakete ausgesetzt worden ist, hat die Begleitprobe in Bezug auf den Treibsatz stets den gleichen Alterungszustand des Treibsatzes der jeweiligen Pilotrakete. Jedes Los Raketen hat also eine Begleitprobe zur Verfügung, die für die Rakete mit der fortgeschrittensten Lebensdauer des Loses repräsentativ ist.

Die Begleitproben werden beispielsweise beim Hersteller der Raketen oder an einer zentralen Stelle des Nutzers der Raketen aktualisiert. Die Alterungsaktualisierung jeder Begleitprobe erfolgt über die Beaufschlagung der zugehörigen Umweltgeschichte aus dem Klimasteuerungsprogramm entweder über eine Klimakammersteuerung vorzugsweise zusammen mit der Steuerung einer mechanischen Vibrationsprüfmaschine, also eine aktive Aktualisierung der Lebensdauer der Begleitprobe, oder über die Klimasteuerung einer Vorrichtung zur Simulation der Langzeitlagerung in einem Langzeitlager, also eine passive Aktualisierung der Lebensdauer der Begleitprobe.

Das Klimasteuerungsprogramm gibt an, ob eine aktive oder eine passive Aktualisierung der Begleitprobe notwendig ist. So kann z. B. die Begleitprobe grundsätzlich passiv aktualisiert werden und erst dann, wenn eine nennenswerte Umweltlast der Pilotrakete erfolgt ist, bestimmt das Klimasteuerungsprogramm eine aktive Aktualisierung der Lebensdauer der Begleitprobe.

Die Klimakammer und die Vibrationsprüfmaschine dienen also der aktiven Aktualisierung der Lebensdauer der Begleitproben. Die Klimakammer ist eine normale Prüfkammer, in der Raketen entsprechend ihrer Umweltanforderung während der Qualifikationsphase getestet werden.

In die Klimakammer wird die Begleitprobe eines Loses eingeführt, wenn eine aktive Aktualisierung ihres Alters notwendig geworden ist. Die Begleitprobe wird dann der im Klimasteuerungsprogramm abgelegten Umweltgeschichte in Bezug auf Temperatur, Feuchtigkeit, gegebenenfalls Druck und Atmosphäre aus der zugehörigen Pilotrakete ausgesetzt. In der Vibrationsprüfmaschine wird die Begleitprobe der entsprechenden Vibrationsbelastung ausgesetzt. Vibrationsprüfmaschine und Klimakammer können in einer klimatisierten Vibrationsprüfkammer kombiniert werden, die alle wesentlichen Lasten in der geeigneten Bandbreite und Belastungsgeschwindigkeit erzeugen kann.

Bei Bedarf oder in regelmäßigen Abständen, führt die Klimakammer die Diagnostik für die zerstörungsfreie Bestimmung der Lebensdauer durch.

Das Langzeitlager dient der passiven Aktualisierung der Lebensdauer von Begleitproben. Wenn die Begleitproben nicht gerade aktiv aktualisiert werden, befinden sie sich im Langzeitlager. Es ist temperatur- und feuchtigkeitsgeregelt. Seine Klimasteuerung entspricht maximal der Klimasteuerung für ein normales Gebäude und soll die Umweltbedingungen einer normalen, kontrollierten Langzeitlagerung abdecken. Auch die passive Aktualisierung der Begleitproben wird entsprechend der Vorgaben vom Klimasteuerungsprogramm durchgeführt. Dies geschieht typischerweise solange die entsprechenden Lose keinen besonderen Wechsellasten ausgesetzt sind.

Besonders bei Bunkerlagerung in ihrem Behälter sind Raketen kaum belastet. Die Tag-Nacht-Temperaturschwankungen sind sehr gering, es finden in der Regel nur saisonal-bedingte und milde Temperaturschwankungen statt.

Das Diagnostikprogramm dient zur zerstörungsfreien Bestimmung des Alterungszustandes des Treibsatzes. Es appliziert an den Begleitproben immer den gleichen normierten Temperaturzyklus in einer Klimakammer, vorzugsweise in der gleichen Leistung und Bauart. Der Temperaturzyklus ist so ausgelegt, dass die Begleitprobe dadurch nicht wesentlich belastet wird und der Zyklus aber nennenswerte und gut messbare Spannungen an der Haftungsoberfläche erzeugt. Diese werden vorzugsweise mittels DBST Sensoren erfasst.

Mit den gemessenen Daten der Normalspannung wird dann die aktuelle Steifigkeit des Treibstoffes zurückgerechnet. Die Rückrechnung erfolgt mittels eines Modells, das von einer dieser Annahmen ausgeht:
- Der Annahme, dass die Steifigkeit des Treibstoffes uniform über die Radialkoordinate des Treibsatzes ist. In diesem Fall gibt es einen einzigen Wert des Elastizitätsmoduls "E", der die gemessene Normalspannung "σ" ergibt.
- Für die Berechnung des Elastizitätsmoduls E können Formeln in Handbüchern (vgl. NASA SP-8073, "Solid Propellant Grain Structural Integrity Analysis", National Aeronatics and Space Administration, Juni 1973) oder ein Finite Element Modell verwendet werden.

Ansonsten kann vorab ein Finite Element Modell des Raketenmotors und des Treibsatzes verwendet werden, um eine Vergleichstabelle der Form E(σ) zu erzeugen, wobei E das Elastizitätsmodul ist und σ die Spannung normal zur Haftungsoberfläche an der Position der DBST Sensoren.

Stehen später Ergebnisse aus einer Zerlegung des Treibsatzes der Begleitprobe zur Verfügung, so können diese optimal dazu verwendet werden, die radiale Verteilung der Steifigkeit über die radiale Koordinate zu korrigieren bzw. um eine äquivalente, mittlere uniforme Steifigkeit zu bestimmen, die die gleiche Normalspannung verursacht. Das gleiche kann auch durch die Treibstoffscheibe, die die Begleitprobe enthalten kann, erreicht werden.

Der Alterungszustand des Treibstoffes wird dann bestimmt, indem man den rückgerechneten Wert der Steifigkeit mit dem Erwartungswert aus dem Lebensdauermodell und aus den Bestimmungen der Steifigkeit vergleicht.

Ansonsten können jederzeit eine oder mehrere Proben zur mechanischen und chemischen Analyse aus der Begleitprobe entnommen werden und weiter analysiert werden, um die Ergebnisse zu bestätigen oder zu korrigieren, wobei diese Prozedur normalerweise nur ein- bis zweimal während in der Überwachungsphase wiederholt werden muss. Die Begleitprobe wird dabei nicht zerstört.

Das nachstehende Beispiel dient der weiteren Erläuterung der Erfindung.

Ein Nutzer führt eine Boden-Luft Rakete mit vorgegebenem Kaliber zur Luftverteidigung ein. Die Rakete wird von einem Feststoffantrieb angetrieben und aus einem Abschlussrohr abgefeuert. Die Rohre sind auf Lastfahrzeugen montiert. Der Feststoffantrieb besitzt einen kammerwandgebundenen Treibsatz, der als Rohrinnenbrenner abbrennt. Nach einer Zuverlässigkeitsanalyse (FMECA: Failure Mode Effect and Criticaly Analysis) werden folgende Komponenten als entscheidend für die Sicherheit und die Lebensdauer der Rakete betrachtet:
- Treibsatz
- Treibsatzanzünder
- Thermalbatterie
- Gefechtskopf

Der Antrieb wird durch eine Rohrverschraubung am Vorkörper der Rakete, welche den Gefechtskopf, den Suchkopf, der die Steuerungselektronik aufweist, montiert. Der Treibsatz ist rückseitig mit einer Abdeckung am Ende der Brennkammerstruktur montiert. Bei der Anzündung platzt die Abdeckung bereits bei geringem Überdruck.

Sämtliche Komponenten sind modular integriert. Ein Austausch der Thermalbatterien am Ende der Lebensdauer ist einfach. Ein Ausfall von Batterie und Gefechtskopf führt dazu, dass die Rakete ihren Zweck nicht erfüllt. Treibsatz, Treibsatzanzünder und Gefechtskopf sind vergleichsweise schwer zu demontieren, der Austausch muss unter hohem Aufwand wegen der hohen Sicherheitsanforderungen beim Umgang mit Explosivstoffen erfolgen. Während ein Ausfall des Gefechtskopfs lediglich dazu führen würde, dass die Rakete keine Wirkung im Ziel erzeugen könnte, würde ein Ausfall des Treibsatzes eine Explosion bei der Anzündung verursachen, die die Zerstörung vom Fahrzeug und den Tod des Fahrzeugpersonals zur Folge hätte. Ein möglicher Treibsatzausfall der Rakete stellt also den Hauptgrund für die Lebensdauerüberwachung der Rakete dar. Die Alterung des Treibsatzes wird durch die chemische Alterung des Treibstoffs unter Einfluss von Sauerstoff verursacht, wobei der Sauerstoff eine fortschreitende, zusätzliche Quervernetzung des Treibstoffbinders hervorruft, was dessen Steifigkeit und Festigkeit erhöht und dessen Dehnfähigkeit reduziert. Als kritischer Lastfall wird eine Anzündung der Rakete bei -40°C berechnet. Dabei steht der Treibsatz unter hoher Dehnung, sodass die Dehnfähigkeit des Materials nicht unter einen vorgegebenen Schwellwert fallen darf. Sobald dies aufgrund der Alterungsversprödung der Fall ist, ist eine Anzündung der Rakete nicht mehr sicher und der Raketenmotor muss ausgetauscht werden.

Nach Studien und aufgrund der Alterungseigenschaften des Raketentreibstoffes wird die Lebensdauer der Rakete im Lastenheft auf 10 Jahre beschränkt. Für die Auslegung des Antriebs wird berücksichtigt, dass Rakete und Fahrzeug im Einsatz in warme Klimazonen kommen können. Dabei wird angenommen, dass die Lufttemperatur und die Sonneneinstrahlung in dieser Zone für eine gewisse Dauer gegebenenfalls 70°C an der Rakete in den wärmsten Stunden des Tages hervorrufen können. Die Abschätzung der Dauer erfolgt entsprechend der Vorschrift und angesichts des Produkthaftungsrisikos wie üblich mit einer Sicherheitsmarge, sodass in der wärmsten Klimazone die Rakete nur z. B. sechs Monate Lebensdauer hat. Dabei wird berücksichtigt, dass aufgrund von Qualitätsschwankungen der Rohstoffe der Treibstoff während der Produktion eine gewisse Streuung seiner Dehnfähigkeit von Los zu Los haben kann. Es werden dementsprechend vergleichsweise schlechte Dehnfähigkeiten angenommen, um das Risiko einer Beanstandung von Produktionslosen zu vermeiden. Die destruktive Kontrolle der Dehnfähigkeit des Treibsatzes nach z. B. einer sechsmonatigen Warmlagerung zeigt an, dass die Restdehnfähigkeit ausreichend ist. Laboruntersuchungen und Ergebnisse aus der Qualifikation erlauben den Aufbau eines relativ zuverlässigen Modells für die Alterung des Treibstoffes, der, zusammen mit den rechnerischen Modellen für die Strukturfreigabe den Aufbau des Lebendauerberechnungsalgorithmus und des Diagnostikprogramm erlauben. Letzteres wird über eine Begleitprobe verifiziert; die Begleitprobe erlaubt unter Zuhilfenahme der Messungen aus den DBST-Sensoren die Validierungen der Berechnungen.

Ein Nutzer bestellt z. B. mehrere Hundert Raketen, deren Treibsätze insgesamt über sechs Lose gefertigt werden. Alle Lose übertreffen die Mindestanforderung an Dehnfähigkeit, allerdings haben einige z. B. drei Lose erheblich mehr Dehnfähigkeit. Es werden sechs Begleitproben hergestellt. Die aktive Aktualisierung wird von einer Klimakammer mit integrierter Vibrationsmaschine beim Treibsatzhersteller durchgeführt, da eine solche Klimakammer dort vorhanden ist. Die passive Aktualisierung der Begleitproben wird von einem Langzeitlager übernommen.

Die Raketenlose werden geliefert und sind im Einsatz, die Begleitproben verbleiben beim Treibsatzhersteller. Für den operativen Einsatz wird in jedes Abschussrohr der Raketen ein Umwelterfassungsgerät integriert. Wenn sie nicht in den Rohren eingesetzt sind, verbleiben die Raketen in einem Behälter, der ebenfalls mit einem Umwelterfassungsgerät bestückt ist. Das Lebensdauerüberwachungssystem weist Datenerfassungsknoten auf, welche zum einen an Bunkergebäuden integriert sind, in denen die Raketen in ihren Behältern gelagert werden, und zum anderen an den Fahrzeugen vorgesehen sind. Die Version am Fahrzeug speichert die Daten und sendet außerhalb ihres Standorts keine Signale aus. Sobald die Fahrzeug am Standort ist, werden die Daten automatisch an den lokalen Bestandsmanager übertragen. Die Knoten an den Bunkergebäuden übermitteln die Daten in regelmäßigen Abständen.

Die logistische Leitung verfügt über einen zentralen Bestandsmanager.

In den ersten sieben Nutzungsjahren stellt man keine besonderen Ereignisse fest. Die Begleitproben altern wie erwartet, die Raketen befinden sich entweder in der Bunkerlagerung (z. B. drei komplette Lose, zwei mit schlechterer Dehnfähigkeit und eines aus den besten drei Losen) oder im Feldeinsatz in z. B. Mitteleuropa. Dann beteiligt sich der Nutzer z. B. an einer Mission, die einen geplanten Verbleib von vier Jahren in einer sehr warmen Klimazone (bis zu 70°C) vorsieht. Die erste Frage, die sich stellt ist, ob das Waffensystem lange genug im Einsatz bleiben kann bzw. wie lange es vor Ort im Fahrzeug schussbereit gehalten werden darf, zumal die Gewährleistung ein Leben von 10 Jahren vorsieht und schon sieben Jahre abgelaufen sind, wenn auch in einer moderaten Umgebung. Der Alterungszustand ist aber durch das Lebensdauerüberwachungssystem bekannt: die Raketentreibsätze sind in den sieben Jahren im mitteleuropäischen Raum kaum gealtert. Die sechs Begleitproben sind für den am meisten thermisch beanspruchten Treibsatz eines Loses meist durch passive, ein Mal jedoch in Folge einer Übung in Südeuropa durch die aktive Aktualisierung repräsentativ.

Die Restdehnfähigkeit ist für alle Lose über die nicht-destruktive Diagnostik mit dem Diagnostikprogramm bekannt. Mit den vorhandenen Ergebnissen wird beschlossen, die Begleitproben zu öffnen, um die Dehnfähigkeiten mit den eingebauten Zugversuchsproben mechanisch und chemisch genau zu bestimmen. Die Durchführung des Versuchs zeigt, dass die Schätzwerte aus den Begleitproben geringfügig nach unten korrigiert werden müssen, was auch durchgeführt wird. Die Korrektur ist wegen einer beobachtbaren Nachhärtung im ersten Jahr nach der Fertigung entstanden. Der korrigierte Lebensdauerberechnungsalgorithmus wird bei allen Bestandsmanagern geladen. Es zeigt sich nun, dass die schlechteren Raketenlose zum einen eine geringere Einsatzverfügbarkeit vor Ort erlauben würden, um die Raketen thermisch zu schonen, zum anderen wegen des zu erwartenden warmen Klimas noch nur zwei Jahre eingesetzt werden könnten. Würde man die besseren Lose einsetzen, so entspräche die Lebensdauer den geforderten vier Jahren, was keine Transportkosten und eine bessere operationelle Verfügbarkeit zur Folge hätte. Deswegen werden zwei gute Lose zum Einsatzort transportiert, und das andere gute Los zusammen mit den drei schlechten in Europa behalten, wobei eins weiterhin im europäischen Einsatz bleibt, und die drei anderen im Bunker gelagert werden.

Vor Ort zeigt sich nun, dass die klimatischen Bedingungen im ersten Jahr besser als erwartet sind, sodass eine Einsatzdauer über vier Jahre sehr wahrscheinlich ist. Das zweite Jahr wird jedoch erheblich wärmer als gedacht, bisweilen werden in die wärmsten Stunden des Tages im Abschussrohr Temperaturen von 60 - 70°C gemessen. Die Begleitproben werden dementsprechend aktualisiert. Es zeigt sich, dass eines der Raketenlose schneller altert als erwartet, das andere jedoch nicht weiter altert. Die Begleitproben werden deshalb geöffnet und kontrolliert. Dabei zeigt sich, dass die Dehnfähigkeit eines Loses niedriger als erwartet ist und die des anderen Loses sich aber kaum geändert hat. Chemische Untersuchungen zeigen, dass das erste Los schneller gealtert ist, weil ein Rohstoff, der für das Los verwendet worden ist, metallische Verunreinigungen aufweist, die den Alterungsprozess des Treibsatzes oberhalb von 50°C beschleunigt haben. Davon ist ein weiteres Los in Europa betroffen. Beim zweiten Los hingegen zeigt sich, dass der vorhandene Sauerstoff innerhalb der Rakete während des ersten Jahres abreagiert ist, die Umweltabdeckung gut funktioniert hat und deswegen kein Sauerstoff für eine weitere Alterung zur Verfügung steht. Das erste Raketenlos wird nun ersetzt durch ein Reservelos mit besserer Dehnfähigkeit des Treibsatzes. Die Mission dauert nun statt vier sechs Jahre. Über die Begleitproben weiß man vorab, dass die Alterung wenig fortschreiten wird, weil die Sauerstoffmenge, die durch die Umweltabdeckung der Motore ins Innere diffundiert, eine sehr langsame Alterung verursacht. Am Ende des Einsatzes sind noch alle Lose für weitere sechs bis sieben Jahre einsatzfähig; die besseren Lose besitzen wegen des Einsatzes ungefähr die gleiche Restdehnfähigkeit wie die schlechteren. In dieser Phase werden lediglich die Thermalbatterien ein Mal ausgetauscht (mit der Begleitprobe hatte man über ein dort eingebautes Temperatursensor festgestellt, dass die Zeit, wo die Thermalbatterie warm gelagert waren, kürzer als gedacht gewesen ist) und es mit dem Hersteller eine generelle Nachrüstung des Suchkopfes nach einer neuen Technologie beschlossen. Diese kann in den sechs Jahren entwickelt und ausreichend erprobt werden, sodass sowohl die Motoren als auch die Suchköpfe zeitgleich bestellt und ersetzt werden können.

Die Vorteile des erfindungsgemäßen Systems zur Lebensdauerüberwachung mit Begleitproben sind nachstehend im Einzelnen beschrieben.

Die Nachhärtung des Treibstoffs hat eine Korrektur der Restdehnfähigkeit nach unten erforderlich gemacht. Dies hätte dazu geführt, dass man ein oder mehrere Raketenlose mit einer schlechteren Dehnfähigkeit des Treibsatzes in den Einsatz geschickt hätte, zu Ungunsten der Sicherheit. Möglicherweise wäre bei einem Schuss eine Rakete im Fahrzeug explodiert, mit weitreichenden Folgen. Hätte man diese Ungewissheit im Nachhinein über einer zerstörende Prüfung beseitigt, so hätte man entweder festgestellt, dass die Treibsätze viel schneller als gedacht altern (Entnahme eines Raketenmotors aus dem schneller alternden Los), sodass man alle Raketenlose und nicht nur das eine, das schneller altert, ersetzt hätte (Transportkosten, Entsorgungskosten und hoher Materialverbrauch).

Die überschnelle Alterung eines Loses wäre nicht festgestellt worden, mit schwerwiegenden Folgen für die Sicherheit.

Die sehr langsame Alterung des anderen Loses wäre nicht festgestellt worden, was zu unnötigen Transportkosten und Entsorgungskosten geführt hätte, um die zwei Lose im Auslandseinsatz zu ersetzen. Die Ausdehnung der Lebensdauer im Einsatz von vier auf sechs Jahre wäre ohne die zerstörende Prüfung vieler Raketen nicht möglich gewesen.

Die weitere Verlängerung der Lebensdauer aller Lose um sechs Jahre wäre nicht möglich gewesen, somit auch nicht die zeitgleiche Nachrüstung von Suchkopf und Antrieb, was eine bessere Planung des Vorhabens erlaubt sowie eine bessere Verfügbarkeit des Bestands und eine bessere Basis für die Nachrüstung der Raketen darstellt.

Das Beispiel zeigt die deutliche Überlegenheit der Erfindung hinsichtlich Sicherheit und Wirtschaftlichkeit. Es wird betont, dass viele Bestandteile des erfindungsgemäßen Systems auch bei der eingangs beschriebenen mit Umwelterfassungsgeräten gekoppelten zerstörenden Prüfung nach dem Stand der Technik notwendig sind

(nämlich Umwelterfassungsgeräte, die Infrastruktur zur Datenerfassung aus den Umwelterfassungsgeräten und ein Lebensdauerberechungsalgorithmus), sodass die Kosten des erfindungsgemäßen Systems die nach dem Stand der Technik kaum übersteigen. Ferner wird betont, dass das vorgeschlagene System "lernfähig" ist: Mit der Zeit wird das Verfahren zur Bestimmung der Lebensdauerdiagnostik insgesamt immer mehr angewendet und es werden Ergebnisse aus eingebetteten Materialproben berücksichtigt. Folglich ist die Aussage über die Lebensdauer des Bestands mit der Zeit immer genauer. Hingegen akkumuliert sich mit der Zeit der Fehler in der Berechnung der Restlebensdauer bei der mit Umwelterfassungsgeräten gekoppelten zerstörenden Prüfung zum einen durch die oben erwähnten, nicht berücksichtigten Effekte, zum anderen durch den Messfehler der Temperatur aufgrund der Messung außerhalb des Treibsatzes, was zu einer immer ungenaueren Aussage über die Restlebensdauer führt. Ferner ist das erfindungsgemäße System mit der Methode der zerstörenden Prüfung kombinierbar. D. h. bei Zweifeln an der Aussage über die verbleibende Lebensdauer der Raketen können jederzeit Raketen aus dem Bestand oder sogar Begleitproben entnommen werden und zerstörend geprüft werden.

Nachstehend ist die Erfindung anhand der beigefügten Zeichnung beispielhaft näher erläutert. Darin zeigen jeweils schematisch im Längsschnitt:
Figur 1 eine Rakete konventioneller Bauart;
Figur 2 eine Begleitprobe für ein Los von Raketen nach Figur 1;
Figur 3 eine Rakete in einem Raketenbehälter; und
Figur 4 ein Lagergebäude mit Raketenbehältern mit und ohne Rakete; während
Figur 5 einen Signalflussplan eines erfindungsgemäßen Systems zeigt.

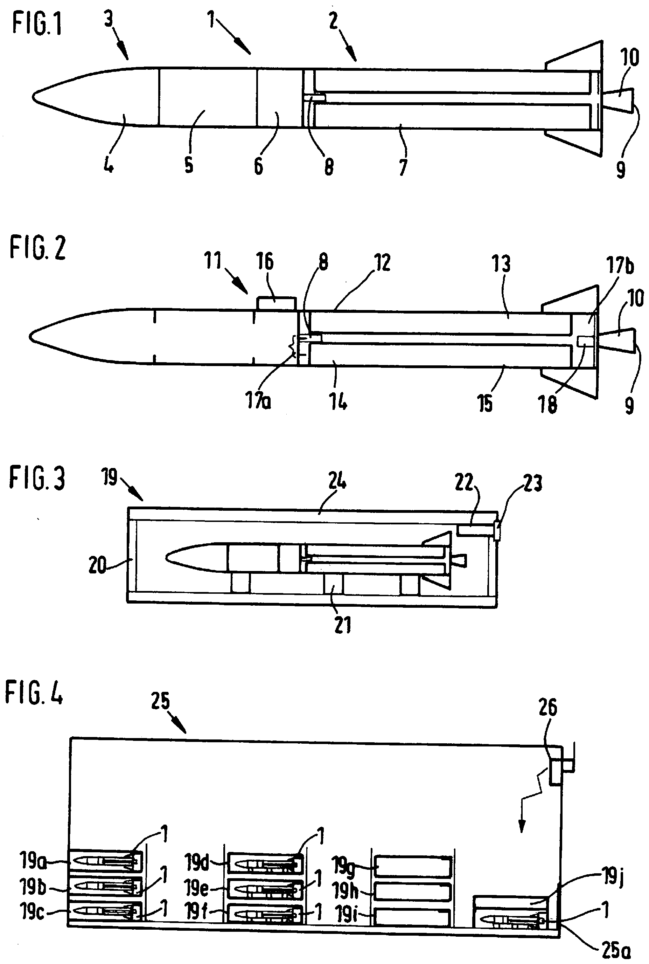

Gemäß Figur 1 weist in die Rakete 1 einen vor dem Raketenmotor 2 angeordneten Vorkörper 3 mit vorgelagertem Suchkopf 4, Gefechtskopf 5 und Steuerungselektronik 6 auf. Der Raketenmotor 2 weist einen Feststoff-Treibsatz 7 auf, der durch einen pyrotechnischen Anzünder 8 angezündet wird. Der Treibsatz 7 ist gegenüber der Umwelt durch eine Abdeckung 9 isoliert, die über der Düse 10 des Raketenmotors 2 vorgesehen ist.

Die Begleitprobe 11 nach Figur 2 unterscheidet sich von der Rakete nach Figur 1 im Wesentlichen dadurch, dass in dem Vorkörper 2 keine kostspieligen Funktionsteile, also insbesondere kein Suchkopf, kein Gefechtskopf und keine Steuerungselektronik enthalten sind, wobei die Funktionsteile durch Ersatzbauteile ersetzt werden können, die eine der Masse der Funktionsteile entsprechende Masse besitzen.

Der Treibsatz 7 des Raketenmotors 2 der Begleitprobe 11 ist aus dem gleichen Treibstofflos hergestellt wie der Treibsatz 7 der Rakete 1. Der Anzünder 8 und die Abdeckung 9 der Begleitprobe 11 sind ebenfalls Originalbauteile, entsprechen also dem Anzünder 8 und der Abdeckung 9 der Rakete 1.

An der Haftungsoberfläche des Treibsatzes 7 der Begleitprobe 11 sind DBST-Sensoren 12 bis 15 vorgesehen, welche die Normalspannung und Temperatur des Treibstoffs messen. Ferner sind am Anzünder 8 am Kopf des Raketenmotors 2 und im Bereich der Düse 10 der Begleitprobe 11 Sensoren 17a, 17b zur Messung der Temperatur und Feuchtigkeit des Gases im Innenraum des Raketenmotors 2 der Begleitprobe 11 angeordnet.

Ein gasdurchlässiges Gehäuse 18, das Materialproben aus dem Treibstofflos, aus dem der Treibsatz 7 hergestellt worden ist, enthält, ist hinter der Düse 10 der Begleitprobe 11 vorgesehen und damit den gleichen Bedingungen wie der Treibsatz 7 der Begleitprobe 11 ausgesetzt.

Die Düse 10 der Begleitprobe 11 ist in gleicher Weise wie die der Rakete 1 mit einer Abdeckung 9 verschlossen. Die Messwerte der Sensoren 12 bis 17 werden in einem Datenerfassungsgerät 16 gespeichert, das an der Begleitprobe 11 angeordnet ist.

Nach Figur 3 ist die Rakete 1 in einem Behälter 19 gelagert. Die Wände 20 des Behälters 19 bestehen aus Metall und werden durch eine Isolationsschicht gegen Temperatureinflüsse und elektromagnetische Einstrahlung geschützt. Die Rakete 1 ist auf einem Dämpflagersystem 21 abgelegt.

Im Behälter 19 ist ein Umwelterfassungsgerät 22 angeordnet, das beispielsweise die Temperatur, Feuchtigkeit und Beschleunigung misst und abspeichert. Das Umwelterfassungsgerät 22 ist per Funk oder Kabel über eine Öffnung 23 in der Behälterwand 20 erreichbar, welche bei einem solchen Behälter für Raketen im Allgemeinen für das Einbringen von Trockenbeuteln vorgesehen ist.

Am Deckel 24 ist ein nicht dargestellter Schalter vorgesehen, mit dem ein Öffnen und Schließen des Behälters 19 erfasst wird. Mit dem Umwelterfassungsgerät 22 wird festgestellt, wann die Rakete 1 aus dem Behälter 19 entfernt wird und ob eine andere Rakete eingelagert wird.

Gemäß Figur 4 sind in einem Lagergebäude 25, das über eine Tür 25a zugänglich ist, beispielsweise einem Bunker, mehrere Behälter 19a bis 19f mit Raketen 1 belegt. Die Behälter 19g bis 19i im Lagergebäude 25 sind leer und der Behälter 19j mit einer Rakete 1 ist geöffnet.

Ein Datenerfassungsknoten 26 fragt die Umweltdaten aus den Umwelterfassungsgeräten 22 (Figur 3) ab, mit denen die Behälter 19a bis 19j jeweils versehen sind, wobei diese Daten mit einem nicht dargestellten Datenübertragungssystem mit einer Antenne außerhalb des Gebäudes 25 an ein lokales Datenverarbeitungssystem oder lokalen Bestandsmanager gefunkt werden.

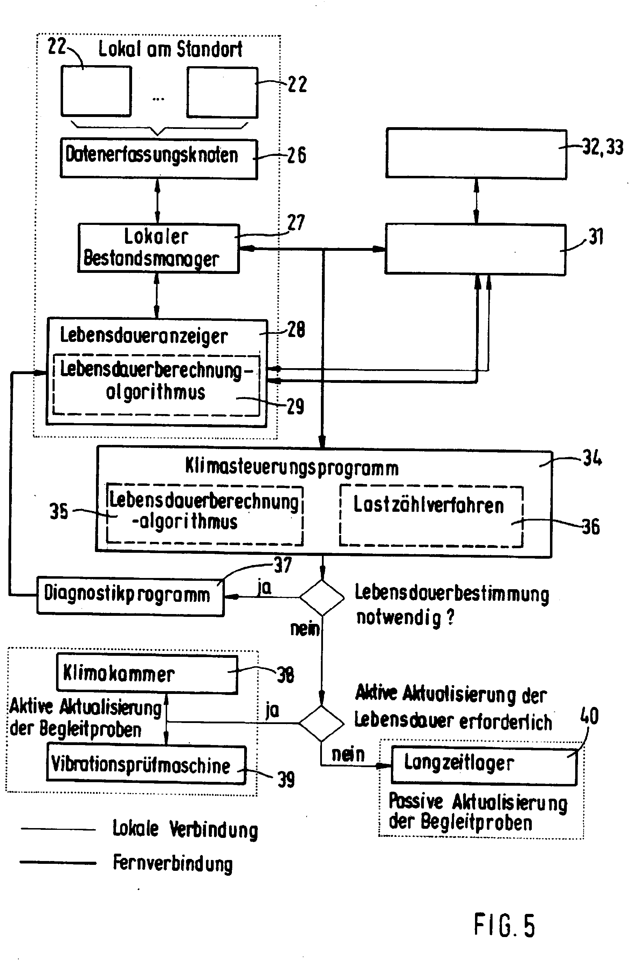

Gemäß Figur 5 werden an den Datenerfassungsknoten 26 an dem Lagergebäude oder -bunker 25 die Daten der Umwelterfassungsgeräte 22 in den Behältern 19 (Figur 3 und 4) übermittelt und von dem Datenerfassungsknoten an das lokale Datenverarbeitungssystem 27, also den lokalen Bestandsmanager an dem betreffenden Stützpunkt oder Standort. Das lokale Datenverarbeitungssystem 27 steht mit einem Lebensdaueranzeiger 28 in Verbindung, in welchen ein Lebensdauerrechnungsprogramm 29 abgelegt ist.

Die lokalen Datenverarbeitungssysteme 27 oder Bestandsmanager der einzelnen Stützpunkte oder Standorte stehen mit einer zentralen Datenbank oder zentralem Bestandsmanager 31 in Verbindung, an den in regelmäßigen Zeitabständen Daten von den lokalen Datenverarbeitungssystemen 27 übermittelt werden. Die zentrale Datenbank 31 weist eine Nutzungsleitung 32 zu einer logistischen Datenbank 33 auf.

Die Begleitproben 11 von dem Treibstofflos, aus dem die Motore der Raketen 1 in den Behältern 19a bis 19i (Figur 4) jeweils hergestellt worden sind, werden einem Klimasteuerungsprogramm 34 unterworfen, welches aus dem Lebensdaueranzeiger 28 die Umweltgeschichte der Raketen 1 übernimmt, wobei das Klimasteuerungsprogramm 34 einen Lebensdauerberechnungsalgorithmus 35 und ein Lastzählverfahren 36 umfasst.

Mit einem Diagnostikprogramm 35 wird der Alterungszustand der Treibsätze 7 der Raketen 1 bestimmt.

Zur Aktualisierung der Begleitproben 11 ist eine Klimakammer 36 mit einer Vibrationsprüfmaschine 37 vorgesehen. In einem Langzeitlager 38 werden die Begleitproben 11 während der übrigen Zeit aufbewahrt.

## Patentansprüche

1. System zur Lebensdauerüberwachung von Raketen, umfassend Raketen und wenigstens eine Begleitprobe **dadurch gekennzeichnet, dass** bei dem von jedem Treibstoff-Los neben den Raketen (1) die wenigstens eine Begleitprobe (11) als eine eigenständige Konstruktion hergestellt wird, die den gleichen Umweltparametern ausgesetzt ist und Treibstoff aus dem gleichen Treibstoff-Los enthält wie die Raketen (1), wobei die Begleitprobe (11) eine Motorbrennkammer aufweist, die mit einem Treibsatz (7) aus dem Los gefüllt ist und der Motorbrennkammer der Raketen (1) entspricht, die mit einem Treibsatz aus dem Los gefüllt sind, wobei der Treibsatz (7) der Begleitprobe (11) und der Treibsatz (7) der Raketen (1) an der Brennkammerwand haftet und der Treibsatz (7) der Begleitprobe (11) an der an der Brennkammerwand haftenden Oberfläche mit Spannungssensoren (12 bis 15) versehen ist, welche mit wenigstens einem Datenerfassungsgerät (16) der Begleitprobe (11) gekoppelt sind.

2. System nach Anspruch 1, **dadurch gekennzeichnet, dass** die Spannungssensoren (12 bis 15) kombinierte Spannungs- und Temperatursensoren sind.

3. System nach Anspruch 1 oder 2, **dadurch gekennzeichnet, dass** die Düse (10) der Begleitprobe (11) und die Düsen (10) der Raketen (1) mit einer Umweltabdeckung (9) abgedeckt sind, wobei zwischen der Umweltabdeckung (9) und der Düse (10) der Begleitprobe (11) ein gasdurchlässiges Gehäuse (18) vorgesehen ist, welches Proben des Treibstoffs von dem Treibstoff-Los enthält, mit dem die Motorbrennkammer der Begleitprobe (11) und die Motorbrennkammern der Raketen (1) gefüllt sind.

4. System nach einem der vorherigen Ansprüche, **dadurch gekennzeichnet, dass** zwischen der Umweltabdeckung (9) und dem Treibsatz (7) der Begleitprobe (11) eine aus den Treibstoff-Los hergestellte Treibstoffscheibe angeordnet ist.

5. System nach einem der vorherigen Ansprüche, **dadurch gekennzeichnet, dass** die Begleitprobe (11) neben dem Treibsatz (7) die gleichen pyrotechnischen Komponenten wie die Raketen (1) aufweist.

6. System nach einem der vorherigen Ansprüche, **dadurch gekennzeichnet, dass** wenigstens einem Teil der Raketen (1) benachbart ein Umwelterfassungsgerät (22) zugeordnet ist.

7. System nach Anspruch 6, **dadurch gekennzeichnet, dass** die Raketen (1) in Raketenbehältern (19) aufbewahrt werden und das Umwelterfassungsgerät (22) in den Raketenbehältern (19) vorgesehen ist.

8. System nach Anspruch 6 oder 7, **dadurch gekennzeichnet, dass** die von dem Umwelterfassungsgerät (22) erfassten Daten abgespeichert werden.

9. System nach Anspruch 8, **dadurch gekennzeichnet, dass** an dem Ort, an dem die Raketen (1) an einem Stützpunkt gelagert werden, jeweils ein Datenerfassungsknoten (26) zur Abfrage und zum Sammeln der Daten der den Raketen (1) benachbart zugeordneten Umwelterfassungsgeräte (22) vorgesehen ist, wobei die abgefragten und gesammelten Daten an ein an dem Stützpunkt vorgesehenes lokales Datenverarbeitungssystem (27) gesendet werden.

10. System nach einem der vorherigen Ansprüche, **dadurch gekennzeichnet, dass** ein Lebensdaueranzeiger (28) für die Raketen (1) vorgesehen ist, welcher ein Lebensdauerberechnungsprogramm (29) aufweist.

11. System nach Anspruch 9 oder 10, **dadurch gekennzeichnet, dass** eine zentrale Datenbank (31) vorgesehen ist, an welche in regelmäßigen Zeitabständen die Daten von den lokalen Datenverarbeitungssystemen (27) übermittelt werden, um folgende Informationen zu generieren:
Position und Anzahl aller Raketen (1) gruppiert nach Standort;
Anzeige aller Raketenlose nach der Restlebensdauer, und Anzeige aller Raketen (1), deren Lebensdauer schneller abnimmt als ein vorgegebener Schwellenwert.

12. System nach Anspruch 10, **dadurch gekennzeichnet, dass** dem Lebensdauerberechnungsprogramm (29) des Lebensdaueranzeigers (28) ein Lebensdauerberechnungsalgorithmus zugrunde liegt, in den die Auswirkung der Temperatur und gegebenenfalls der Feuchtigkeit auf die Geschwindigkeit des Alterungsprozesses und die Auswirkung des Alterungsprozesses auf die für die Berechnung der Strukturfestigkeit des Treibsatzes (7) notwendigen Materialeigenschaften implementiert sind.

13. System nach Anspruch 1 und 12, **dadurch gekennzeichnet, dass** von jedem Los Raketen, das aus dem Treibstofflos hergestellt worden ist, diejenige Rakete in dem Los, welche aufgrund des Lebensdaueranzeigers (28) die geringste Lebensdauer aufweist, als Pilotrakete ausgewählt wird, wobei die Begleitprobe (11) von dem Treibstofflos, aus dem das Los Raketen hergestellt worden ist, zur Aktualisierung der Lebensdauer der Begleitprobe (11) einem Klimasteuerungsprogramm (34) unterworfen wird, welches aus dem Lebensdaueranzeiger (28) die Umweltgeschichte der Pilotrakete übernimmt.

14. System nach Anspruch 13, **dadurch gekennzeichnet, dass** eine Klimakammer (36) und eine Vibrationsprüfmaschine (37) zur aktiven Aktualisierung der Lebensdauer der Begleitproben (11) vorgesehen ist.

15. System nach Anspruch 14, **dadurch gekennzeichnet, dass** ein Langzeitlager (38) vorgesehen ist, in dem die Begleitproben (11) während der Zeit außerhalb der aktiven Aktualisierung ihrer Lebensdauer in der Klimakammer (36) und mit der Vibrationsprüfmaschine (37) gelagert werden.

16. System nach einem der vorherigen Ansprüche, **dadurch gekennzeichnet, dass** ein Diagnostikprogramm (35) zur Bestimmung des Alterungszustandes der Treibsätze (7) eines Loses vorgesehen ist, welches an den Begleitproben (11) einen Temperaturzyklus appliziert, durch welchen Spannungen an der Haftungsoberfläche der Treibsätze (7) der Begleitproben (11) auftreten, welche mit den Spannungs- und Temperatursensoren (12 bis 15) erfasst werden, um die Steifigkeit des Treibstoffs zu berechnen.

## Claims

1. System for monitoring the service life of rockets, comprising rockets and at least one companion specimen, **characterized in that** the at least one companion specimen (11) of each propellant batch is produced, in addition to the rockets (1), as an independent construction, which is exposed to the same environmental parameters and contains propellant from the same propellant batch as the rockets (1), wherein the companion specimen (11) has an engine combustion chamber which is filled with a propellant charge (7) from the batch and corresponds to the engine combustion chamber of the rockets (1) which are filled with a propellant charge from the batch, wherein the propellant charge (7) of the companion specimen (11) and the propellant charge (7) of the rockets (1) adhere to the combustion chamber wall and the propellant charge (7) of the companion specimen (11) is provided on the surface adhering to the combustion chamber wall with stress sensors (12 to 15) which are coupled to at least one data acquisition device (16) of the companion specimen (11).

2. System according to claim 1, **characterized in that** the stress sensors (12 to 15) are combined stress and temperature sensors.

3. System according to claim 1 or 2, **characterized in that** the nozzle (10) of the companion specimen (11) and the nozzles (10) of the rockets (1) are covered with an environmental cover (9), wherein a gas-permeable housing (18) is provided between the environmental cover (9) and the nozzle (10) of the companion specimen (11), which contains samples of the propellant from the propellant batch with which the engine combustion chamber of the companion specimen (11) and the engine combustion chambers of the rockets (1) are filled.

4. System according to any of the preceding claims, **characterized in that** a propellant disc made from the propellant batch is arranged between the environmental cover (9) and the propellant charge (7) of the companion specimen (11).

5. System according to any of the preceding claims, **characterized in that** the companion specimen (11) has, in addition to the propellant charge (7), the same pyrotechnic components as the rockets (1).

6. System according to any of the preceding claims, **characterized in that** an environmental acquisition device (22) is assigned to at least a part of the rockets (1) adjacent thereto.

7. System according to claim 6, **characterized in that** the rockets (1) are stored in rocket containers (19) and the environmental acquisition device (22) is provided in the rocket containers (19).

8. System according to claim 6 or 7, **characterized in that** the data acquired by the environmental acquisition device (22) are stored.

9. System according to claim 8, **characterized in that** at the location where the rockets (1) are stored at a base, a data acquisition node (26) is provided in each case for retrieving and collecting the data of the environmental acquisition devices (22) assigned adjacent to the rockets (1), wherein the retrieved and collected data are transmitted to a local data processing system (27) provided at the base.

10. System according to any of the preceding claims, **characterized in that** a service life indicator (28) is provided for the rockets (1), which has a life calculation program (29).

11. System according to claim 9 or 10, **characterized in that** a central database (31) is provided to which the data are transmitted by the local data processing systems (27) at regular time intervals in order to generate the following information:
position and number of all rockets (1) grouped by location;
display of all rocket batches according to remaining service life; and
display of all rockets (1) the service life of which decreases faster than a preset threshold value.

12. System according to claim 10, **characterized in that** the service life calculation program (29) of the service life indicator (28) is based on a service life calculation algorithm in which the effect of the temperature and, if appropriate, of the humidity on the speed of the ageing process and the effect of the ageing process on the material properties necessary for the calculation of the structural strength of the propellant charge (7) are implemented.

13. System according to claims 1 and 12, **characterized in that** from each batch of rockets which has been produced from the propellant batch, the rocket in the batch which, on the basis of the service life indicator (28), has the lowest service life is selected as the pilot rocket, wherein the companion specimen (11) of the propellant batch from which the batch of rockets has been produced is subjected to a climate control program (34) in order to update the service life of the companion specimen (11), which climate control program (34) adopts the environmental history of the pilot rocket from the service life indicator (28).

14. System according to claim 13, **characterized in that** a climatic chamber (36) and a vibration testing machine (37) are provided in order to actively update the service life of the companion specimens (11).

15. System according to claim 14, **characterized in that** a long-term storage facility (38) is provided, in which the companion specimens (11) are stored during the time outside the active updating of their service life in the climatic chamber (36) and with the vibration testing machine (37).

16. System according to any of the preceding claims, **characterized in that** a diagnostic program (35) is provided for determining the ageing state of the propellant charges (7) of a batch, which diagnostic program (35) applies a temperature cycle to the companion specimens (11), by means of which stresses occur on the adhesion surface of the propellant charges (7) of the companion specimens (11) that are acquired by the stress and temperature sensors (12 to 15) in order to calculate the stiffness of the propellant.

## Revendications

1. Système destiné à la surveillance de la durée de vie de fusées, comprenant des fusées et au moins un échantillon associé, **caractérisé en ce qu'**en plus des fusées (1) dans chaque lot de carburant, ledit au moins un échantillon associé (11) est fabriqué en tant que construction indépendante qui est exposée aux mêmes paramètres environnementaux et contient du carburant provenant du même lot de carburant que les fusées (1), l'échantillon associé (11) comportant une chambre de combustion du moteur qui est remplie de propergol (7) provenant du lot et correspond aux chambres de combustion du moteur des fusées (1) qui sont remplies d'un propergol provenant du lot, le propergol (7) de l'échantillon associé (11) et le propergol (7) des fusées (1) adhérant à la paroi de la chambre de combustion et le propergol (7) de l'échantillon associé (11) étant muni sur la surface adhérant à la paroi de la chambre de combustion de capteurs de tension (12 à 15) qui sont couplés à au moins un appareil d'acquisition de données (16) de l'échantillon associé (11).

2. Système selon la revendication 1, **caractérisé en ce que** les capteurs de tension (12 à 15) sont des capteurs de tension et de température combinés.

3. Système selon la revendication 1 ou 2, **caractérisé en ce que** la tuyère (10) de l'échantillon associé (11) et les tuyères (10) des fusées (1) sont recouvertes d'une couverture de protection contre l'environnement (9), entre la couverture de protection contre l'environnement (9) et la tuyère (10) de l'échantillon associé (11) est prévue une enceinte (18) perméable aux gaz, qui contient des échantillons du carburant du lot de carburant avec lequel sont remplies la chambre de combustion du moteur de l'échantillon associé (11) et les chambres de combustion du moteur des fusées (1).

4. Système selon l'une quelconque des revendications précédentes, **caractérisé en ce qu'**entre la couverture de protection contre l'environnement (9) et le propergol (7) de l'échantillon associé (11) est disposé un disque de carburant fabriqué à partir du lot de carburant.

5. Système selon l'une quelconque des revendications précédentes, **caractérisé en ce qu'**outre le propergol (7) l'échantillon associé (11) comporte les mêmes composants pyrotechniques que les fusées (1).

6. Système selon l'une quelconque des revendications précédentes, **caractérisé en ce qu'**un appareil de détection de l'environnement (22) est affecté au voisinage à au moins une partie des fusées (1).

7. Système selon la revendication 6, **caractérisé en ce que** les fusées (1) sont conservées dans des récipients de fusées (19) et l'appareil de détection de l'environnement (22) est prévu dans les récipients de fusées (19).

8. Système selon la revendication 6 ou 7, **caractérisé en ce que** les données acquises par l'appareil de détection de l'environnement (22) sont sauvegardées.

9. Système selon la revendication 8, **caractérisé en ce que** sur le site sur lequel les fusées (1) sont stockées dans une base est prévu chaque fois un noeud d'acquisition de données (26) destiné à la recherche et à la collecte des données des appareils de détection de l'environnement (22) affectés au voisinage aux fusées (1), les données recherchées et collectées étant transmises à un système de traitement de données local (27) prévu dans la base.

10. Système selon l'une quelconque des revendications précédentes, **caractérisé en ce qu'**un afficheur de durée de vie (28) qui comporte un programme de calcul de la durée de vie (29) est prévu pour les fusées (1).

11. Système selon la revendication 9 ou 10, **caractérisé en ce qu'**une banque de données centrale (31) est prévue, à laquelle sont transmises à intervalles de temps réguliers les données des systèmes locaux de traitement de données (27), afin de fournir les informations suivantes :
position et nombre de toutes les fusées (1) groupées par site ;
affichage de tous les lots de fusées par la durée de vie restante, et
affichage de toutes les fusées (1) dont la durée de vie diminue plus rapidement qu'une valeur seuil préétablie.

12. Système selon la revendication 10, **caractérisé en ce qu'**à la base du programme de calcul de la durée de vie (29) de l'afficheur de la durée de vie (28) se trouve un algorithme de calcul de la durée de vie dans lequel sont implémentés l'effet de la température et éventuellement de l'humidité sur la vitesse du processus de vieillissement et l'effet du processus de vieillissement sur les propriétés de matériau requises pour le calcul de l'intégrité structurale du propergol (7).

13. Système selon la revendication 1 et la revendication 12, **caractérisé en ce que** parmi chaque lot de fusées qui a été fabriqué à partir du lot de carburant, on choisit comme fusée pilote dans le lot la fusée qui a la durée de vie la plus courte sur la base de l'afficheur de durée de vie (28), l'échantillon associé (11) du lot de carburant à partir duquel a été fabriqué le lot de fusée étant soumis, pour l'actualisation de la durée de vie de l'échantillon associé (11), à un programme de climatisation (34) qui transmet à partir de l'afficheur de la durée de vie (28) l'histoire environnementale de la fusée pilote.

14. Système selon la revendication 13, **caractérisé en ce qu'**une chambre climatique (36) et une machine d'essai de vibrations (37) sont prévues pour l'actualisation active de la durée de vie des échantillons associés (11).

15. Système selon la revendication 14, **caractérisé en ce qu'**une installation de stockage de longue durée (38) est prévue, dans laquelle les échantillons associés (11) sont stockés pendant le temps en dehors de l'actualisation active de leur durée de vie dans la chambre climatique (36) et avec la machine d'essai de vibrations (37).

16. Système selon l'une quelconque des revendications précédentes, **caractérisé en ce que** pour la détermination de l'état de vieillissement des propergols (7) d'un lot est prévu un programme de diagnostic (35) qui applique sur les échantillons associés (11) un cycle de température par lequel des tensions se manifestent à la surface d'adhérence des propergols (7) des échantillons associés (11), qui sont détectées par les capteurs de tension et de température (12 à 15), afin de calculer la rigidité du carburant.
